# FASCICULE DE BREVET EUROPEEN

(11) **EP 4 613 645 B1**
(45) Date de publication et mention de la délivrance du brevet: **14.10.2026**
(21) Numéro de dépôt: 25161472.3
(22) Date de dépôt: 04.03.2025
(51) Int. Cl.: B64C 33/02, F02C 7/045

(54) **ENTRÉE D'AIR D'AÉRONEF COMPRENANT UNE LÈVRE, UN CONDUIT INTÉRIEUR AINSI QU'AU MOINS UN RAIDISSEUR RADIAL RELIÉ AU CONDUIT INTÉRIEUR ET ESPACÉ DE LA LÈVRE**
FLUGZEUG-LUFTEINLASS MIT EINER LIPPE, EINEM INNENKANAL SOWIE MINDESTENS EINER RADIALEN VERSTEIFUNG, DIE MIT DEM INNENKANAL VERBUNDEN UND VON DER LIPPE BEABSTANDET IST
AIRCRAFT AIR INLET COMPRISING A LIP, AN INNER DUCT AND AT LEAST ONE RADIAL STIFFENER CONNECTED TO THE INNER DUCT AND SPACED FROM THE LIP

(30) Priorité: 05.03.2024 FR 2402223
(43) Date de publication de la demande: 10.09.2025
(73) Titulaire: AIRBUS OPERATIONS (S.A.S.), 31060 Toulouse (FR)
(72) Inventeur: SAUDEL, Brice, TOULOUSE (FR); SMITH, Grégoire, TOULOUSE (FR)
(74) Mandataire: Airbus-OPS SAS

(56) Documents cités:
- FR-A1- 3 133 593
- US-A1- 2005 218 261
- US-A1- 2011 168 839
- US-A1- 2016 377 090

## Description

La présente demande se rapporte à une entrée d'air d'aéronef comprenant une lèvre, un conduit intérieur et au moins un raidisseur radial relié au conduit intérieur et espacé de la lèvre ainsi qu'à un aéronef comportant au moins une telle entrée d'air.

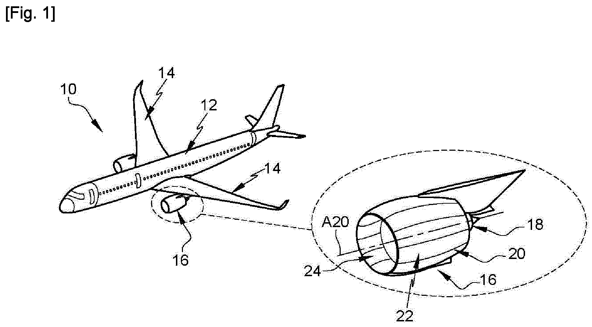

Selon un mode de réalisation visible sur la figure 1, un aéronef 10 comprend un fuselage 12, des ailes 14 positionnées de part et d'autre du fuselage 12 ainsi que plusieurs ensembles de propulsion 16 positionnés sous les ailes 14 et reliés à ces dernières par des mâts 18. Chaque ensemble de propulsion 16 comprend une motorisation 20 ainsi qu'une nacelle 22 entourant la motorisation 20 et permettant notamment de canaliser un flux d'air en direction de la motorisation 20.

La motorisation 20 présente un axe de rotation A20. Pour la suite de la description, une direction longitudinale est une direction parallèle à l'axe de rotation A20. Un plan longitudinal est un plan contenant l'axe de rotation A20. Une direction radiale est une direction perpendiculaire à l'axe de rotation A20. Enfin, un plan transversal est un plan perpendiculaire à l'axe de rotation A20. Les notions avant et arrière font référence au sens d'écoulement du flux d'air dans la motorisation 20 en fonctionnement, qui s'écoule de l'avant vers l'arrière.

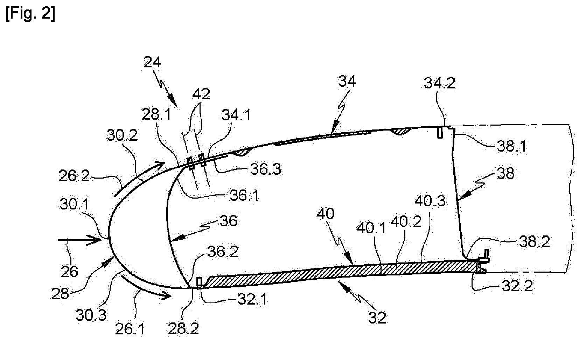

Comme illustré sur la figure 2, chaque nacelle 22 comprend, à l'avant, une entrée d'air 24 configurée pour séparer un flux d'air 26 en un flux d'air intérieur 26.1 qui pénètre dans la nacelle 22 en direction de la motorisation 20 et un flux d'air extérieur 26.2 s'écoulant à l'extérieur de la nacelle 22.

Selon un mode de réalisation, une entrée d'air 24 comprend une lèvre 28 qui présente une forme en C en coupe dans un plan longitudinal. La lèvre 28 comprend un bord d'attaque 30.1 qui scinde le flux d'air 26 en un flux d'air intérieur 26.1 et un flux d'air extérieur 26.2, une portion extérieure 30.2 qui s'étend du bord d'attaque 30.1 jusqu'à un bord arrière extérieur 28.1 de la lèvre 28 et sur laquelle s'écoule le flux d'air extérieur 26.2 ainsi qu'une portion intérieure 30.3 qui s'étend du bord d'attaque 30.1 jusqu'à un bord arrière intérieur 28.2 de la lèvre 28 et sur laquelle s'écoule le flux d'air intérieur 26.1.

L'entrée d'air 24 comprend également :
- un conduit intérieur 32, positionné dans le prolongement de la portion intérieure 30.3 de la lèvre 28, qui présente un bord avant 32.1 relié au bord arrière intérieur 28.2 de la lèvre 28 et un bord arrière 32.2,
- une paroi extérieure tubulaire 34, positionnée dans le prolongement de la portion extérieure 30.2 de la lèvre 28, qui présente un bord avant 34.1 relié au bord arrière extérieur 28.1 de la lèvre 28 et un bord arrière 34.2,
- un cadre avant 36, en forme d'anneau, qui présente un bord extérieur périphérique 36.1 relié à la portion extérieure 30.2 de la lèvre 28 et/ou au bord avant 34.1 de la paroi extérieure tubulaire 34 ainsi qu'un bord intérieur périphérique 36.2 relié à la portion intérieure 30.3 de la lèvre 28 et/ou au bord avant 32.1 du conduit intérieur 32,
- un cadre arrière 38, en forme d'anneau, qui présente un bord extérieur périphérique 38.1 relié au bord arrière 34.2 de la paroi extérieure tubulaire 34 et un bord intérieur périphérique 38.2 relié au bord arrière 32.2 du conduit intérieur 32.

Selon un mode de réalisation, les cadres avant et arrière 36, 38 sont positionnés approximativement dans deux plans transversaux. En variante, au moins un des cadres avant et arrière 36, 38 est légèrement tronconique et forme avec un plan transversal un angle de l'ordre de 10°.

Selon une configuration, le conduit intérieur 32 est délimité par au moins un panneau d'atténuation acoustique 40 qui comprend, en s'écartant de l'axe de la motorisation A20, au moins une couche acoustiquement résistive poreuse 40.1, au moins une structure alvéolaire 40.2 ainsi qu'une couche réflectrice 40.3 (non poreuse).

Selon un agencement, le bord extérieur périphérique 36.1 du cadre avant 36 présente un rebord 36.3 contre lequel sont plaqués le bord arrière intérieur 28.2 de la lèvre 28 et le bord avant 34.1 de la paroi extérieure tubulaire 34, la lèvre 28 et la paroi extérieure tubulaire 34 étant reliées au rebord 36.3 par des éléments de liaison 42, répartis sur toute la circonférence de la nacelle 22, qui affleurent au niveau des surfaces de la lèvre 28 et de la paroi extérieure tubulaire 34 en contact avec le flux d'air extérieur 26.2.

En fonctionnement, le flux d'air extérieur 26.2 est laminaire à partir du bord d'attaque 30.1 (également appelé point d'arrêt aérodynamique) sur une certaine longueur qui doit être la plus longue possible pour réduire la traînée générée par l'entrée d'air 24 de la nacelle 22. En l'absence d'éléments de liaison (comme des vis, des rivets ou autres), la longueur théorique, caractérisant la zone d'air laminaire, pourrait atteindre une distance de l'ordre de 400 à 950 mm en fonction de la section transversale de la nacelle. Selon le mode de réalisation visible sur la figure 2, l'entrée d'air 24 comprend des éléments de liaison 42 espacés du bord d'attaque 30.1 d'une distance inférieure à 500 mm, de l'ordre de 300 mm, qui génèrent des perturbations, ce qui se traduit par une augmentation de la traînée de l'entrée d'air 24 de la nacelle 22 et, in fine, de la consommation énergétique de l'aéronef 10.

Le document US2016/377090 décrit une entrée d'air de nacelle qui comprend un tube extérieur, une cloison et plusieurs supports. Le tube extérieur forme un conduit principal s'étendant jusqu'à une extrémité arrière. La cloison interne est reliée au tube extérieur. Les supports sont disposés autour de l'axe du tube extérieur, à proximité de la cloison. Ils sont configurés pour soutenir la partie arrière du tube extérieur.

La présente invention vise à remédier à tout ou partie des inconvénients de l'art antérieur.

A cet effet, l'invention a pour objet une entrée d'air d'aéronef selon la revendication 1.

Selon l'invention, la lèvre est directement ou indirectement reliée au bord extérieur périphérique arrière du cadre arrière au niveau d'au moins un troisième plan transversal plus proche du deuxième plan transversal que du premier plan transversal. En complément, l'entrée d'air comprend au moins un raidisseur radial relié à la couche réflectrice du panneau de traitement acoustique, distant de la lèvre et situé entre les premier et deuxième plans transversaux.

Ce raidisseur radial relié au conduit intérieur permet à l'entrée d'air de résister aux chocs d'oiseaux. De plus, les éléments de liaison reliant la lèvre au cadre arrière étant décalés vers l'arrière par rapport à la zone d'air laminaire, ils ne génèrent pas de perturbations au niveau de cette zone d'air laminaire.

Selon une autre caractéristique, la deuxième aile de chaque raidisseur radial s'étend dans un plan radial ou présente une forme tronconique et forme avec un plan transversal un angle inférieur ou égal à 20°.

Selon une autre caractéristique, la deuxième aile de chaque raidisseur radial présente une dimension prise selon une direction radiale supérieure à la moitié, de préférence supérieure aux deux tiers, d'une distance séparant le conduit intérieur et la lèvre prise selon la direction radiale.

Selon une autre caractéristique, chaque raidisseur radial comprend une extension reliée à la deuxième extrémité de la deuxième aile et sensiblement parallèle à la première aile.

Selon une autre caractéristique, l'entrée d'air comprend au moins une structure absorbante supportée par le raidisseur radial ou reliée à ce dernier.

Selon une autre caractéristique, la structure absorbante présente une face intérieure configurée pour coopérer avec la première aile et en contact avec ce dernier, une face extérieure configurée pour coopérer avec l'extension et en contact avec cette dernière, une face avant reliant les faces intérieure et extérieure, orientée vers la deuxième aile et espacée ou en contact avec cette dernière, ainsi qu'une face arrière reliant les faces intérieure et extérieure, opposée à la face avant.

Selon une autre caractéristique, la face arrière est tronconique ou en forme d'une portion tronconique.

Selon une autre caractéristique, la structure absorbante est une structure en mousse ou une structure alvéolaire.

Selon une autre caractéristique, l'extension s'étend sur un même secteur angulaire que la première aile.

Selon une variante, l'entrée d'air comprend un unique raidisseur radial qui s'étend sur toute la circonférence de l'entrée d'air.

Selon une autre variante, l'entrée d'air comprend plusieurs raidisseurs radiaux répartis sur la circonférence de l'entrée d'air et espacés entre eux.

L'invention a également pour objet un aéronef comportant au moins une entrée d'air selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef et d'un ensemble de propulsion,
- La figure 2 est une coupe longitudinale d'une entrée d'air d'une nacelle d'aéronef illustrant un mode de réalisation de l'art antérieur,
- La figure 3 est une coupe longitudinale d'une entrée d'air d'une nacelle d'aéronef illustrant un mode de réalisation de l'invention.

Selon un mode de réalisation, un aéronef comprend au moins un ensemble de propulsion qui comporte une entrée d'air 50 pour canaliser un flux d'air 52 en direction d'une motorisation.

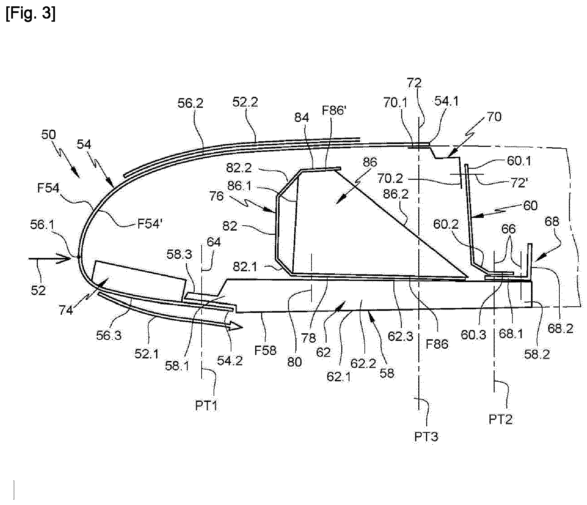

A l'exception de l'entrée d'air 50, les autres éléments de l'ensemble de propulsion ne sont pas représentés sur la figure 3. Ils sont connus de l'homme du métier et peuvent être identiques à ceux de l'art antérieur. L'entrée d'air 50 présente un axe longitudinal confondu avec l'axe de la motorisation lorsque l'entrée d'air 50 est reliée à la motorisation.

L'entrée d'air 50 comprend une lèvre 54 qui présente une forme en C en coupe dans un plan longitudinal. La lèvre 54 comprend un bord d'attaque 56.1 qui scinde le flux d'air 52 en un flux d'air intérieur 52.1 et un flux d'air extérieur 52.2, une portion extérieure 56.2 qui s'étend du bord d'attaque 56.1 jusqu'à un bord arrière extérieur 54.1 de la lèvre 54 et sur laquelle s'écoule le flux d'air extérieur 52.2 ainsi qu'une portion intérieure 56.3 qui s'étend du bord d'attaque 56.1 jusqu'à un bord arrière intérieur 54.2 de la lèvre 54 et sur laquelle s'écoule le flux d'air intérieur 52.1.

La lèvre 54 présente une face extérieure F54 en contact avec les flux d'air intérieur et extérieur 52.1, 52.2 ainsi qu'une face intérieure F54'.

L'entrée d'air 50 comprend :
- un conduit intérieur 58, positionné dans le prolongement de la portion intérieure 56.3 de la lèvre 54, qui présente une surface extérieure F58 (en contact avec le flux d'air intérieur 52.1), un bord avant 58.1 relié au bord arrière intérieur 54.2 de la lèvre 54 et un bord arrière 58.2,
- un cadre arrière 60, en forme d'anneau, qui présente un bord extérieur périphérique 60.1 relié au bord arrière extérieur 54.1 de la lèvre 54 et un bord intérieur périphérique 60.2 directement ou indirectement relié au bord arrière 58.2 du conduit intérieur 58.

Selon un mode de réalisation, l'entrée d'air 50 comprend au moins un panneau de traitement acoustique 62 qui forme au moins une partie de la surface extérieure F58 du conduit intérieur 58. Selon un agencement, le panneau de traitement acoustique 62 s'étend du bord avant 58.1 du conduit intérieur 58 jusqu'au bord arrière 58.2 du conduit intérieur 58. Selon une configuration, l'entrée d'air 50 comprend plusieurs panneaux de traitement acoustique 62 juxtaposés les uns aux autres et répartis autour de l'entrée d'air 50.

Chaque panneau de traitement acoustique 62 comprend, en s'écartant de la surface extérieure F58 du conduit intérieur 58, au moins une couche acoustiquement résistive poreuse 62.1, au moins une structure alvéolaire 62.2 ainsi qu'au moins une couche réflectrice 62.3 (non poreuse).

Indépendamment les unes des autres, la couche acoustiquement résistive 62.1, la structure alvéolaire 62.2 et la couche réflectrice 62.3 peuvent être métalliques ou en matériau composite.

Selon un mode de réalisation, le conduit intérieur 58 comprend une extension tubulaire avant 58.3 configurée pour s'emmancher dans le bord arrière intérieur 54.2 de la lèvre 54 de manière à être plaquée contre la face intérieure F54' de la lèvre 54, l'extension tubulaire avant 58.3 et la lèvre 54 étant reliées par une série de premiers éléments de liaison 64 répartis sur toute la circonférence de l'entrée d'air 50.

Selon une configuration, l'extension tubulaire avant 58.3 est solidaire de la couche réflectrice 62.3. Selon un agencement, l'extension tubulaire avant 58.3 et la couche réflectrice 62.3 du panneau de traitement acoustique 62 forment une unique et même pièce de manière à former un chemin de passage des efforts.

Bien entendu, l'invention n'est pas limitée à ce mode de réalisation pour relier la lèvre 54 et le conduit intérieur 58. Quel que soit le mode de réalisation, la lèvre 54 et le conduit intérieur 58 sont reliés, au niveau d'au moins un premier plan transversal PT1, par des premiers éléments de liaison 64 répartis sur toute la circonférence de l'entrée d'air 50 et situés approximativement dans le premier plan transversal PT1.

Selon un mode de réalisation, le cadre arrière 60 est positionné approximativement dans un plan transversal. En variante, le cadre arrière 60 est tronconique et forme avec un plan transversal un angle compris entre 0 et 45°.

Selon un mode de réalisation, le cadre arrière 60 comprend, au niveau de son bord intérieur périphérique 60.2, un rebord 60.3 plaqué contre le conduit intérieur 58, plus particulièrement contre la couche réflectrice 62.3 du panneau de traitement acoustique 62, et relié à ce dernier ou cette dernière par une série de deuxièmes éléments de liaison 66 répartis sur toute la circonférence de l'entrée d'air 50.

Bien entendu, l'invention n'est pas limitée à ce mode de réalisation pour relier le conduit intérieur 58 et le cadre arrière 60. Quel que soit le mode de réalisation, le conduit intérieur 58 et le cadre arrière 60 sont reliés, au niveau d'au moins un deuxième plan transversal PT2, par des deuxièmes éléments de liaison 66 répartis sur toute la circonférence de l'entrée d'air 50 et situés approximativement dans le deuxième plan transversal PT2.

Selon un mode de réalisation, l'entrée d'air 50 comprend une cornière arrière intérieure 68 qui présente une première aile 68.1 reliée au conduit intérieur 58 ainsi qu'une deuxième aile 68.2 positionnée approximativement dans un plan transversal et configurée pour être plaquée contre un carter de soufflante d'une motorisation et reliée à ce dernier.

Selon un agencement, la première aile 68.1 de la cornière arrière intérieure 68 est intercalée entre la couche réflectrice 62.3 du panneau de traitement acoustique 62 et le rebord 60.3 du cadre arrière 60, les mêmes deuxièmes éléments de liaison 66 assurant une liaison entre le conduit intérieur 58, le cadre arrière 60 et la cornière arrière extérieure 68.

Selon une configuration, la lèvre 54 est directement reliée au cadre arrière 60. Selon une configuration visible sur la figure 3, la lèvre 54 est indirectement reliée au cadre arrière 60. Selon une configuration, l'entrée d'air 50 comprend au moins une cornière arrière extérieure 70 qui présente une première aile 70.1 plaquée contre la face intérieure F54' de la lèvre 54 et reliée à cette dernière par des troisièmes éléments de liaison 72 ainsi qu'une deuxième aile 70.2 reliée au cadre arrière 60 par des quatrièmes éléments de liaison 72'. Généralement, l'entrée d'air 50 comprend plusieurs cornières arrière extérieures 70 réparties sur la circonférence de l'entrée d'air 50.

Quel que soit le mode de réalisation, la lèvre 54 est directement ou indirectement reliée au cadre arrière 60 au niveau d'au moins un troisième plan transversal PT3, plus proche du deuxième plan transversal PT2 que du premier plan transversal PT1, par au moins une série de troisièmes éléments de liaison 72 situés approximativement dans le troisième plan transversal PT3.

En fonctionnement, le flux d'air extérieur 52.2 est laminaire à partir du bord d'attaque 56.1 sur une zone d'air laminaire qui doit être la plus longue possible pour réduire la traînée générée par l'entrée d'air 50 de la nacelle. A titre indicatif, la zone d'air laminaire présente une longueur de l'ordre de 400 à 950 mm en fonction de la section transversale de la nacelle. Selon l'invention, les troisièmes éléments de liaison 72 sont décalés vers l'arrière par rapport à la zone d'air laminaire si bien qu'ils ne génèrent pas de perturbations au niveau de cette zone d'air laminaire susceptibles d'augmenter la traînée de l'entrée d'air 50 de la nacelle et, in fine, la consommation énergétique de l'aéronef 10.

Selon une configuration, l'entrée d'air 50 comprend, en plus du panneau de traitement acoustique 62 dit principal, au moins un panneau de traitement acoustique secondaire 74 qui présente au moins une couche acoustiquement résistive formant la face extérieure F54 de la lèvre 54. Selon un agencement, le panneau de traitement acoustique secondaire 74 est situé au niveau de la portion intérieure 56.3 de la lèvre 54.

Selon une particularité de l'invention, l'entrée d'air 50 comprend au moins un raidisseur radial 76 relié à la couche réflectrice 62.3 du panneau de traitement acoustique 62, distant de la lèvre 54 et situé entre les premier et deuxième plans transversaux PT1, PT2.

Selon un premier agencement, l'entrée d'air 50 comprend un unique raidisseur radial 76 qui s'étend sur toute la circonférence de l'entrée d'air 50. Selon un autre agencement, l'entrée d'air 50 comprend plusieurs raidisseurs radiaux 76, répartis sur la circonférence de l'entrée d'air 50, qui peuvent être jointifs ou espacés entre eux.

Selon un mode de réalisation, chaque raidisseur radial 76 comprend une première aile 78 plaquée contre la couche réflectrice 62.3 du panneau de traitement acoustique 62 et reliée à cette dernière par des éléments de fixation 80 ainsi qu'une deuxième aile radiale 82 qui présente une première extrémité 82.1 reliée à la première aile 78 et une deuxième extrémité 82.2 distante de la première aile 78 et espacée de la lèvre 54.

L'entrée d'air 50 présente une première dimension, correspondant à une distance qui sépare les premier et deuxième plans transversaux PT1, PT2 prise selon la direction longitudinale ainsi qu'une deuxième dimension, correspondant à une distance qui sépare le conduit intérieur 58 et la lèvre 54 prise selon la direction radiale.

Selon une configuration, la deuxième aile 82 de chaque raidisseur radial 76 s'étend dans un plan radial ou présente une forme tronconique et forme avec un plan transversal un angle inférieur ou égal à 20°.

Selon un agencement, la première aile 78 de chaque raidisseur radial 76 présente une longueur supérieure à la moitié, de préférence supérieure aux deux tiers, de la première dimension du conduit intérieur 58. La deuxième aile 82 de chaque raidisseur radial 76 présente une dimension, prise selon une direction radiale, supérieure à la moitié, de préférence supérieure aux deux tiers, de la deuxième dimension de l'entrée d'air 50.

Selon un mode de réalisation, au moins un raidisseur radial 76 comprend une extension 84 reliée à la deuxième extrémité 82.2 de la deuxième aile 82 et sensiblement parallèle à la première aile 78. Cette extension 84 s'étend sur un même secteur angulaire que la première aile 78. L'extension 84 présente une longueur inférieure ou égale à la longueur de la première aile 78. Les première et deuxième ailes 78, 82 ainsi que l'extension 84 forment une unique et même pièce métallique ou en matériau composite.

Selon une configuration, l'entrée d'air 50 comprend au moins une structure absorbante 86 supportée par le raidisseur radial 76 ou reliée à ce dernier. Selon un mode de réalisation, la structure absorbante 86 est une structure en mousse ou une structure alvéolaire configurée pour absorber un choc d'oiseaux.

La structure absorbante 86 est imbriquée entre la première aile 78 et l'extension 84. Elle présente une face intérieure F86 configurée pour coopérer avec la première aile 78 et en contact avec ce dernier, une face extérieure F86' configurée pour coopérer avec l'extension 84 et en contact avec cette dernière, une face avant 86.1 reliant les faces intérieure et extérieure F86, F86', orientée vers la deuxième aile 82 et espacée ou en contact avec cette dernière, ainsi qu'une face arrière 86.2, reliant les faces intérieure et extérieure F86, F86', opposée à la face avant 86.1. La face avant 86.1 est positionnée approximativement dans un plan transversal. La face arrière 86.2 est tronconique ou en forme d'une portion tronconique. Quel que soit le mode de réalisation, le raidisseur radial 76 relié au conduit intérieur 58 permet à l'entrée d'air 50 de résister aux chocs d'oiseaux. La présence de la structure absorbante 86 supportée par le raidisseur radial 76 renforce cette résistance aux chocs d'oiseaux.

Selon un autre avantage, tout l'intérieur de l'entrée d'air 50 est accessible en retirant uniquement la lèvre 54 qui est reliée au reste de l'entrée d'air en un nombre limité de points. Enfin, le raidisseur radial 76 permet de renforcer le conduit intérieur 58 de sorte que le raidisseur radial 76, le conduit intérieur 58 et le cadre arrière 60 forment une structure rigide et stable même lorsque la lèvre 54 est démontée.

Enfin, le raidisseur radial 76 permet de renforcer le conduit intérieur 58 de sorte que le raidisseur radial 76, le conduit intérieur 58 et le cadre arrière 60 forment une structure rigide et stable même lorsque la lèvre 54 est démontée.

## Revendications

1. Entrée d'air d'aéronef comprenant :
- une lèvre (54) qui comporte un bord d'attaque (56.1), un bord arrière extérieur (54.1) ainsi qu'un bord arrière intérieur (54.2),
- un conduit intérieur (58) qui comporte une surface extérieure (F58), un bord avant (58.1) relié au niveau d'au moins un premier plan transversal (PT1) au bord arrière intérieur (54.2) de la lèvre (54) ainsi qu'un bord arrière (58.2),
- un cadre arrière (60) qui comporte un bord extérieur périphérique arrière (60.1) ainsi qu'un bord intérieur périphérique arrière (60.2) directement ou indirectement relié au niveau d'au moins un deuxième plan transversal (PT2) au bord arrière (58.2) du conduit intérieur (58),
- au moins un panneau de traitement acoustique (62) qui forme au moins une partie de la surface extérieure (F58) du conduit intérieur (58) et comprend, en s'écartant de la surface extérieure (F58), au moins une couche acoustiquement résistive poreuse (62.1), au moins une structure alvéolaire (62.2) ainsi qu'au moins une couche réflectrice (62.3),
la lèvre (54) étant directement ou indirectement reliée au bord extérieur périphérique arrière (60.1) du cadre arrière (60) au niveau d'au moins un troisième plan transversal (PT3) plus proche du deuxième plan transversal (PT2) que du premier plan transversal (PT1), l'entrée d'air (50) comprenant au moins un raidisseur radial (76) relié à la couche réflectrice (62.3) du panneau de traitement acoustique (62), distant de la lèvre (54) et situé entre les premier et deuxième plans transversaux (PT1, PT2), chaque raidisseur radial (76) comprenant une première aile (78) plaquée contre la couche réflectrice (62.3) du panneau de traitement acoustique (62) et reliée à cette dernière par des éléments de fixation (80) ainsi qu'une deuxième aile radiale (82) qui présente une première extrémité (82.1) reliée à la première aile (78) ainsi qu'une deuxième extrémité (82.2) distante de la première aile (78) et espacée de la lèvre (54), l'entrée d'air **étant caractérisée en ce que** la première aile (78) de chaque raidisseur radial (76) présente une longueur supérieure à la moitié, de préférence supérieure aux deux tiers, d'une distance séparant les premier et deuxième plans transversaux (PT1, PT2).

2. Entrée d'air d'aéronef selon la revendication précédente, **caractérisée en ce que** la deuxième aile (82) de chaque raidisseur radial (76) s'étend dans un plan radial ou présente une forme tronconique et forme avec un plan transversal un angle inférieur ou égal à 20°.

3. Entrée d'air d'aéronef selon l'une des revendications 1 à 2, **caractérisée en ce que** la deuxième aile (82) de chaque raidisseur radial (76) présente une dimension prise selon une direction radiale supérieure à la moitié, de préférence supérieure aux deux tiers, d'une distance séparant le conduit intérieur (58) et la lèvre (54) prise selon la direction radiale.

4. Entrée d'air d'aéronef selon l'une des revendications 1 à 3, **caractérisée en ce que** chaque raidisseur radial (76) comprend une extension (84) reliée à la deuxième extrémité (82.2) de la deuxième aile (82) et sensiblement parallèle à la première aile (78).

5. Entrée d'air d'aéronef selon l'une des revendications précédentes, **caractérisée en ce que** l'entrée d'air (50) comprend au moins une structure absorbante (86) supportée par le raidisseur radial (76) ou reliée à ce dernier.

6. Entrée d'air d'aéronef selon les revendications 4 et 5, **caractérisée en ce que** la structure absorbante (86) présente une face intérieure (F86) configurée pour coopérer avec la première aile (78) et en contact avec ce dernier, une face extérieure (F86') configurée pour coopérer avec l'extension (84) et en contact avec cette dernière, une face avant (86.1) reliant les faces intérieure et extérieure (F86, F86'), orientée vers la deuxième aile (82) et espacée ou en contact avec cette dernière, ainsi qu'une face arrière (86.2), reliant les faces intérieure et extérieure (F86, F86'), opposée à la face avant (86.1).

7. Entrée d'air d'aéronef selon la revendication précédente, **caractérisée en ce que** la face arrière (86.2) est tronconique ou en forme d'une portion tronconique.

8. Entrée d'air d'aéronef selon l'une des revendications 5 à 7, **caractérisée en ce que** la structure absorbante (86) est une structure en mousse ou une structure alvéolaire.

9. Entrée d'air d'aéronef selon l'une des revendications 4 à 8, **caractérisée en ce que** l'extension (84) s'étend sur un même secteur angulaire que la première aile (78).

10. Entrée d'air d'aéronef selon l'une des revendications précédentes, **caractérisée en ce que** l'entrée d'air (50) comprend un unique raidisseur radial (76) qui s'étend sur toute la circonférence de l'entrée d'air (50).

11. Entrée d'air d'aéronef selon l'une des revendications 1 à 9, **caractérisée en ce que** l'entrée d'air (50) comprend plusieurs raidisseurs radiaux (76) répartis sur la circonférence de l'entrée d'air (50) et espacés entre eux.

12. Aéronef comportant au moins une entrée d'air selon l'une des revendications précédentes.

## Patentansprüche

1. Lufteinlass eines Luftfahrzeugs, umfassend:
- eine Lippe (54), die eine Anströmkante (56.1), eine äußere Hinterkante (54.1) und eine innere Hinterkante (54.2) aufweist,
- einen Innenkanal (58), der eine Außenfläche (F58), eine Vorderkante (58.1), die an mindestens einer ersten Querebene (PT1) mit der inneren Hinterkante (54.2) der Lippe (54) verbunden ist, sowie eine Hinterkante (58.2) aufweist,
- einen hinteren Rahmen (60), der eine hintere umlaufende Außenkante (60.1) aufweist sowie eine hintere umlaufende Innenkante (60.2), die direkt oder indirekt an mindestens einer zweiten Querebene (PT2) mit der Hinterkante (58.2) des Innenkanals (58) verbunden ist,
- mindestens eine Schallbehandlungsplatte (62), die mindestens einen Teil der Außenfläche (F58) des Innenkanals (58) bildet und, sich von der Außenfläche (F58) weg erstreckend, mindestens eine poröse akustisch resistive Schicht (62.1), mindestens eine Wabenstruktur (62.2) sowie mindestens eine reflektierende Schicht (62.3) umfasst,
wobei die Lippe (54) an mindestens einer dritten Querebene (PT3), die der zweiten Querebene (PT2) näher als der ersten Querebene (PT1) ist, direkt oder indirekt mit der hinteren umlaufenden Außenkante (60.1) des hinteren Rahmens (60) verbunden ist, wobei der Lufteinlass (50) mindestens eine radiale Aussteifung (76) umfasst, die mit der reflektierenden Schicht (62.3) der Schallbehandlungsplatte (62) verbunden ist, von der Lippe (54) entfernt ist und zwischen der ersten und der zweiten Querebene (PT1, PT2) gelegen ist, wobei jede radiale Aussteifung (76) einen ersten Schenkel (78), der gegen die reflektierende Schicht (62.3) der Schallbehandlungsplatte (62) gepresst ist und mit dieser durch Befestigungselemente (80) verbunden ist, sowie einen zweiten radialen Schenkel (82) umfasst, der ein erstes Ende (82.1) aufweist, das mit dem ersten Schenkel (78) verbunden ist, sowie ein zweites Ende (82.2), das von dem ersten Schenkel (78) entfernt ist und von der Lippe (54) beabstandet ist, wobei der Lufteinlass **dadurch gekennzeichnet ist, dass** der erste Schenkel (78) jeder radialen Aussteifung (76) eine Länge aufweist, die mehr als die Hälfte, vorzugsweise mehr als zwei Drittel, eines Abstands zwischen der ersten und der zweiten Querebene (PT1, PT2) beträgt.

2. Lufteinlass eines Luftfahrzeugs nach dem vorhergehenden Anspruch, **dadurch gekennzeichnet, dass** sich der zweite Schenkel (82) jeder radialen Aussteifung (76) in einer radialen Ebene erstreckt oder eine Kegelstumpfform aufweist und mit einer Querebene einen Winkel kleiner oder gleich 20° bildet.

3. Lufteinlass eines Luftfahrzeugs nach einem der Ansprüche 1 bis 2, **dadurch gekennzeichnet, dass** der zweite Schenkel (82) jeder radialen Aussteifung (76) eine Abmessung entlang einer radialen Richtung aufweist, die mehr als die Hälfte, vorzugsweise mehr als zwei Drittel, eines Abstands zwischen dem Innenkanal (58) und der Lippe (54) entlang der radialen Richtung beträgt.

4. Lufteinlass eines Luftfahrzeugs nach einem der Ansprüche 1 bis 3, **dadurch gekennzeichnet, dass** jede radiale Aussteifung (76) eine Verlängerung (84) umfasst, die mit dem zweiten Ende (82.2) des zweiten Schenkels (82) verbunden ist und im Wesentlichen parallel zu dem ersten Schenkel (78) ist.

5. Lufteinlass eines Luftfahrzeugs nach einem der vorhergehenden Ansprüche, **dadurch gekennzeichnet, dass** der Lufteinlass (50) mindestens eine absorbierende Struktur (86) umfasst, die von der radialen Aussteifung (76) getragen wird oder mit dieser verbunden ist.

6. Lufteinlass eines Luftfahrzeugs nach den Ansprüchen 4 und 5, **dadurch gekennzeichnet, dass** die absorbierende Struktur (86) eine Innenseite (F86), die dazu ausgelegt ist, mit dem ersten Schenkel (78) zusammenzuwirken und mit diesem in Kontakt zu stehen, eine Außenseite (F86'), die dazu ausgelegt ist, mit der Verlängerung (84) zusammenzuwirken und mit dieser in Kontakt zu stehen, eine vordere Seite (86.1), die die Innen- und Außenseiten (F86, F86') verbindet, zu dem zweiten Schenkel (82) ausgerichtet ist und von diesem beabstandet oder mit diesem in Kontakt steht, sowie eine hintere Seite (86.2), welche die Innen- und Außenseiten (F86, F86') verbindet und zu der vorderen Seite (86.1) entgegengesetzt ist, aufweist.

7. Lufteinlass eines Luftfahrzeugs nach dem vorhergehenden Anspruch, **dadurch gekennzeichnet, dass** die hintere Seite (86.2) kegelstumpfförmig oder in Form eines kegelstumpfförmigen Abschnitts ist.

8. Lufteinlass eines Luftfahrzeugs nach einem der Ansprüche 5 bis 7, **dadurch gekennzeichnet, dass** die absorbierende Struktur (86) eine Schaumstruktur oder eine Wabenstruktur ist.

9. Lufteinlass eines Luftfahrzeugs nach einem der Ansprüche 4 bis 8, **dadurch gekennzeichnet, dass** sich die Verlängerung (84) über einen gleichen Winkelsektor wie der erste Schenkel (78) erstreckt.

10. Lufteinlass eines Luftfahrzeugs nach einem der vorhergehenden Ansprüche, **dadurch gekennzeichnet, dass** der Lufteinlass (50) eine einzige radiale Aussteifung (76) umfasst, die sich über den gesamten Umfang des Lufteinlasses (50) erstreckt.

11. Lufteinlass eines Luftfahrzeugs nach einem der Ansprüche 1 bis 9, **dadurch gekennzeichnet, dass** der Lufteinlass (50) mehrere radiale Aussteifungen (76) umfasst, die über den Umfang des Lufteinlasses (50) verteilt sind und untereinander beabstandet sind.

12. Luftfahrzeug, das mindestens einen Lufteinlass nach einem der vorhergehenden Ansprüche aufweist.

## Claims

1. Aircraft air inlet, comprising:
- a lip (54) that has a leading edge (56.1), an outer rear edge (54.1) and an inner rear edge (54.2),
- an inner duct (58) that has an outer surface (F58), a front edge (58.1) connected at at least one first transverse plane (PT1) to the inner rear edge (54.2) of the lip (54) and a rear edge (58.2),
- a rear frame (60) that has a rear peripheral outer edge (60.1) and a rear peripheral inner edge (60.2) directly or indirectly connected at at least one second transverse plane (PT2) to the rear edge (58.2) of the inner duct (58),
- at least one acoustic treatment panel (62) that forms at least a part of the outer surface (F58) of the inner duct (58) and comprises, in a direction moving away from the outer surface (F58), at least one porous acoustically resistive layer (62.1), at least one cellular structure (62.2) and at least one reflective layer (62.3),
the lip (54) being directly or indirectly connected to the rear peripheral outer edge (60.1) of the rear frame (60) at at least one third transverse plane (PT3) closer to the second transverse plane (PT2) than to the first transverse plane (PT1), the air inlet (50) comprising at least one radial stiffener (76) connected to the reflective layer (62.3) of the acoustic treatment panel (62), at a distance from the lip (54) and situated between the first and second transverse planes (PT1, PT2), each radial stiffener (76) comprising a first flange (78), pressed against the reflective layer (62.3) of the acoustic treatment panel (62) and connected thereto by fastening elements (80), and a second, radial flange (82) that has a first end (82.1) connected to the first flange (78) and a second end (82.2) at a distance from the first flange (78) and spaced apart from the lip (54), the air inlet being **characterized in that** the first flange (78) of each radial stiffener (76) has a length greater than half, preferably greater than two thirds, of a distance separating the first and second transverse planes (PT1, PT2).

2. Aircraft air inlet according to the preceding claim, **characterized in that** the second flange (82) of each radial stiffener (76) extends in a radial plane or has a frustoconical shape and forms, with a transverse plane, an angle of less than or equal to 20°.

3. Aircraft air inlet according to either of Claims 1 and 2, **characterized in that** the second flange (82) of each radial stiffener (76) has a dimension, taken in a radial direction, greater than half, preferably greater than two thirds, of a distance separating the inner duct (58) and the lip (54), taken in the radial direction.

4. Aircraft air inlet according to one of Claims 1 to 3, **characterized in that** each radial stiffener (76) comprises an extension (84) connected to the second end (82.2) of the second flange (82) and substantially parallel to the first flange (78).

5. Aircraft air inlet according to one of the preceding claims, **characterized in that** the air inlet (50) comprises at least one absorbent structure (86) supported by the radial stiffener (76) or connected thereto.

6. Aircraft air inlet according to Claims 4 and 5, **characterized in that** the absorbent structure (86) has an inner face (F86) configured to cooperate with the first flange (78) and in contact therewith, an outer face (F86') configured to cooperate with the extension (84) and in contact therewith, a front face (86.1) connecting the inner and outer faces (F86, F86'), oriented towards the second flange (82) and spaced apart therefrom or in contact therewith, and a rear face (86.2), connecting the inner and outer faces (F86, F86'), opposite the front face (86.1).

7. Aircraft air inlet according to the preceding claim, **characterized in that** the rear face (86.2) is frustoconical or in the form of a frustoconical portion.

8. Aircraft air inlet according to one of Claims 5 to 7, **characterized in that** the absorbent structure (86) is a foam structure or a cellular structure.

9. Aircraft air inlet according to one of Claims 4 to 8, **characterized in that** the extension (84) extends over one and the same angular sector as the first flange (78).

10. Aircraft air inlet according to one of the preceding claims, **characterized in that** the air inlet (50) comprises a single radial stiffener (76) that extends over the entire circumference of the air inlet (50).

11. Aircraft air inlet according to one of Claims 1 to 9, **characterized in that** the air inlet (50) comprises a plurality of radial stiffeners (76) distributed over the circumference of the air inlet (50) and spaced apart from each other.

12. Aircraft having at least one air inlet according to one of the preceding claims.
